# EUROPEAN PATENT SPECIFICATION

(11) **EP 4 419 883 B1**
(45) Date of publication and mention of the grant of the patent: **01.07.2026**
(21) Application number: 21797985.5
(22) Date of filing: 18.10.2021
(51) Int. Cl.: G01M 17/04, G01M 7/00

(54) **NOISE, VIBRATION AND HARSHNESS TEST FOR AN ELECTROMECHANICAL ACTUATOR SYSTEM**
GERÄUSCH-, VIBRATIONS- UND RAUHEITSTEST FÜR EIN ELEKTROMECHANISCHES AKTUATORSYSTEM
ESSAI DE BRUIT, DE VIBRATION ET DE RUDESSE POUR SYSTÈME D'ACTIONNEUR ÉLECTROMÉCANIQUE

(43) Date of publication of application: 28.08.2024
(73) Proprietor: Jaguar Land Rover Limited, Coventry, Warwickshire CV3 4LF (GB)
(72) Inventor: BOUARU, Adrian, Coventry Warwickshire CV3 4LF (GB); PAPANIKOLAOU, Thomas, Coventry, Warwickshire CV3 4LF (GB)
(74) Representative: Jaguar Land Rover Patents Department
(86) International application number: PCT/EP2021/078802
(87) International publication number: WO 2023/066450

(56) References cited:
- EP-A1- 3 130 903
- US-A- 5 390 543
- US-A1- 2019 359 252
- US-A1- 2020 182 747
- US-B2- 8 768 641

## Description

### TECHNICAL FIELD

The present disclosure relates to a noise, vibration and harshness (NVH) test for an electromechanical actuator system. Aspects of the invention relate to a diagnostic apparatus, to a system, to a vehicle, to a method, and to a computer software, for testing a noise, vibration and harshness (NVH) characteristic of a vehicle due to operation of an electromechanical actuator system.

### BACKGROUND

Vehicles (for example petrol, diesel, electric or hybrid vehicles) comprise active suspension systems, such as an electronic active roll control system, for maintaining vehicle stability. Such electronic active roll control systems comprise at least one actuator, the actuator being configured so as to actively impart motor control on the suspension system, the at least one actuator being coupled to a roll bar.

Such active suspension systems may include a number of individual subcomponents or mechatronic subsystems. There may be a high level vehicle control generating a system demand signal, for example a torque demand signal, to influence vehicle motion. There may be a low level controller providing control signals to an actuator (for example to provide motor control) of the active suspension system, to deliver the demanded signal provided. There may be associated mechanical or electromechanical components to deliver a physical manifestation of the demanded signal, for example a motor. There may be a dedicated power supply system. There may be significant interaction between these subsystems in order to provide operation of the active suspension system.

It is not uncommon for mechatronic systems to exhibit noise, vibration and harshness (NVH) phenomena (for example, knocking, rattling, shaking, etc.). This noise can be caused by several sources, including the overall control strategy of the vehicle, the mechanical design, system external inputs (either electrical, mechanical, or electromechanical), system integrations with the vehicle, system ageing, or a combination thereof. When NVH events occur after the vehicle has been built (i.e. is no longer in a manufacturing facility), there may be few or no means by which a user in a service environment can diagnose an issue with the active suspension system or identify the cause of the NVH event. A tool to enable investigation of causes of NVH events and similar problems arising from the active suspension system is therefore desirable.

US2020/182747A1 describes a method for performing BSR testing on a vehicle with an active suspension system, the method including actuating at least one actuator of the active suspension system to induce vibration of a vehicle or at least one component of the vehicle at a first frequency, recording a first acoustic response generated by the vehicle or the at least one component in response to the induced vibration at the first frequency, and analyzing the first recorded acoustic response to identify a presence of one or more manufacturing defects associated with the vehicle or the at least one component. This disclosure also describes a method for characterizing resonance frequencies of a vehicle equipped with an active suspension system.

EP3130903A1 describes a method for identifying characteristics of a vehicle steering system by inputting multiple frequency torque vibrations using the steering motor and measuring vibrations with a torque and a rotation sensor.

It is an aim of the present invention to address one or more of the disadvantages associated with the prior art.

### SUMMARY OF THE INVENTION

Aspects and embodiments of the invention provide a diagnostic apparatus, a system, a vehicle, a method, and a computer software as claimed in the appended claims.

According to an aspect of the present invention there is provided a diagnostic apparatus according to claim 1.

The invention apparatus may be configured to compare the generated NVH characteristic of the vehicle to an expected NVH profile for the vehicle, and output a result of the comparison.

Instead of a sinusoidal torque demand profile, the torque demand signal may correspond to a continuously time varying torque demand profile with repeated zero-crossings, providing both a positive and negative torque demand.

The sinusoidal torque demand profile of the invention apparatus may comprise one or more of: an amplitude within a predetermined amplitude range, a frequency within a predetermined frequency range, and a signal duration within a predetermined signal duration range.

One or more of an amplitude and a frequency of the sinusoidal torque demand profile may be set via a vehicle software update.

The sinusoidal torque demand profile may be generated to excite NVH characteristics caused by one or more of: a gearbox of an actuator of the electromechanical actuator system; and a degraded resilient, elastomeric or plastic material in the electromechanical actuator system.

The diagnostic apparatus may be configured to, prior to applying the torque demand signal, verify that one or more safety preconditions are met.

Verifying that the one or more safety preconditions are met may comprise one or more of: ensuring that a system automotive safety integrity level, ASIL, is maintained; verifying that the vehicle is in a stationary state; and verifying that there are no fault conditions in the vehicle.

Verifying that the vehicle is in a stationary state may comprise one or more of: verifying that the vehicle is not moving, verifying that an engine of the vehicle is not active, verifying that the vehicle is not in gear, and verifying that a parking brake of the vehicle is enabled.

Verifying that there are no fault conditions in the vehicle may comprise one or more of: checking a log to see if a fault condition has been recorded, and running one or more tests to check if a fault condition is returned. The fault condition may be a fault condition relating to the electromechanical actuator system. Running one or more tests to check if a fault condition is returned may comprise checking a current value of one or more signals available to the diagnostic apparatus.

Verifying that the one or more safety preconditions are met may comprise verifying if a provided security credential meets a security authorisation level. The provided security credential may be one or more of: a chassis control module security credential, and a toolset security credential.

The diagnostic apparatus may be configured to stop application of the torque demand signal to the electromechanical actuator system if a test duration exceeds an expected time period.

The diagnostic apparatus may be configured to: identify a frequency of the recorded NVH characteristic; when the frequency of the recorded NVH characteristic is in a first frequency region, attribute the recorded NVH characteristic to a first fault type; and when the frequency of the recorded NVH characteristic is in a second frequency region, attribute the recorded NVH characteristic to a second fault type.

According to another aspect of the invention, there is provided a system comprising the diagnostic apparatus as disclosed herein, and the electromechanical actuator system of the vehicle.

According to another aspect of the invention, there is provided a vehicle comprising a diagnostic apparatus as disclosed herein, or a system as disclosed herein.

According to another aspect of the invention, there is provided a method, comprising: generating a torque demand signal corresponding to a sinusoidal torque demand profile, the sinusoidal torque demand profile configured to cause excitation of noise, vibration and harshness, NVH, characteristics of a vehicle; transmitting the torque demand signal to an electromechanical actuator system of the vehicle; recording a NVH characteristic of the vehicle generated in response to application of the torque demand signal; and outputting the recorded NVH characteristic of the vehicle.

The method may comprise verifying that one or more safety preconditions are met prior to applying the torque demand signal.

According to another aspect of the invention, there is provided computer readable instructions which, when executed by a processor, are arranged to perform a method as disclosed herein.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a controller of a diagnostic apparatus according to examples disclosed herein;
Figure 2a shows a control system for a vehicle connected to front and rear anti-roll bars according to examples disclosed herein;
Figure 2b shows a control system for a vehicle comprising plural sub-systems, and front and rear anti-roll bars according to examples disclosed herein;
Figure 3 shows an example torque demand profile according to examples disclosed herein;
Figure 4 shows an example method according to examples disclosed herein; and
Figure 5 shows a vehicle in accordance with an embodiment of the invention.

### DETAILED DESCRIPTION

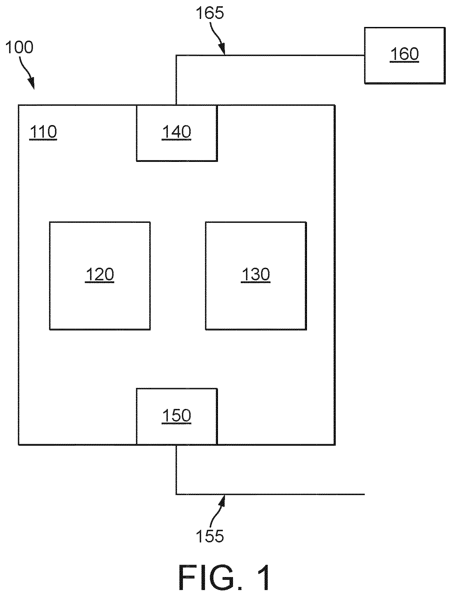

With reference to Figure 1, there is illustrated a control system 100 for a diagnostic apparatus for a vehicle. The control system 100 comprises one or more controllers 110. The control system 100 as illustrated in Figure 1 comprises one controller 110, although it will be appreciated that this is merely illustrative. The controller 110 comprises processing means 120 and memory means 130. The processing means 120 may be one or more electronic processing device 120 which operably executes computer-readable instructions. The memory means 130 may be one or more memory device 130. The memory means 130 is electrically coupled to the processing means 120. The memory means 130 is configured to store instructions, and the processing means 120 is configured to access the memory means 130 and execute the instructions stored thereon.

The controller 110 comprises an input means 140 and an output means 150. The input means 140 may comprise an electrical input 140 of the controller 110. The output means 150 may comprise an electrical output 150 of the controller 100. The input 140 may be arranged to receive a noise, vibration and harshness (NVH) signal 165 from one or more sensors 160 of the vehicle. The inputs may be either physical (for example from a hard wired sensor) and/or may be from a vehicle communication bus. The input 140 may be arranged to additionally receive combined sensor or communication data from multiple sensors or other controller units. The NVH signal 165 is an electrical signal which is indicative of the occurrence of one or more NVH events of the vehicle. For example, the NVH signal may be indicative of a rate of change of torque across a gearbox of a electromechanical actuator system. In some examples, the NVH signal may be indicative of an impulsive force radiated through the electromechanical actuator system and into the vehicle structure. Further examples for which the NVH signal may be indicative of may include one or more of: a frequency and magnitude of vibration of the vehicle structure; a dynamic of audible noise produced in the vehicle during an NVH event; and a duration for which a particular NVH event lasts after stopping application of a torque to an actuator. The output 150 is arranged to output a torque demand signal 155 for controlling one or more actuators of an electromechanical actuator system of the vehicle. In some examples, a measurement of vehicle roll rate may be received from a sensor connected to the controller 110 via a vehicle communication bus. In some examples, a measurement of suspension height at each corner of the vehicle may be received as a voltage reading from a hardwired sensor. In some examples, a measurement of vehicle speed may be received from an additional controller in the vehicle, via a vehicle communication bus. In some examples, a measured torque and actuator motor position may be received from one or more anti-roll bar controllers, connected to the controller 110 via a vehicle communications bus.

By outputting a torque demand signal 155 and applying said torque demand signal to one or more actuators of the electromechanical actuator system of the vehicle, a response of the vehicle due to the application of the torque demand signal can be recorded using the one or more sensors 160 of the vehicle. The torque demand signal 155 is configured to induce NVH events in the vehicle. Specifically, the torque demand signal 155 provides rapid mechanical movement of the electromechanical actuator system and any gears in the gearbox therein.

The electromechanical actuator system is an anti-roll control system. The actuator may be an actuator associated with an active roll control system, wherein the active roll control system may form part of the suspension system. The actuator may be a rotary actuator. The actuator may include one or more gears or a gearbox.

The diagnostic apparatus described herein may be implemented as an external device which can be communicatively connected to the vehicle by either a physical connector or wirelessly. Alternatively, the diagnostic apparatus may be implemented by one or more dedicated controllers within the vehicle. Alternatively, the diagnostic apparatus may be implemented in software on one or more general purpose controllers within the vehicle, for example a controller of a chassis control module. In some examples, a combination of the above implementations may be used.

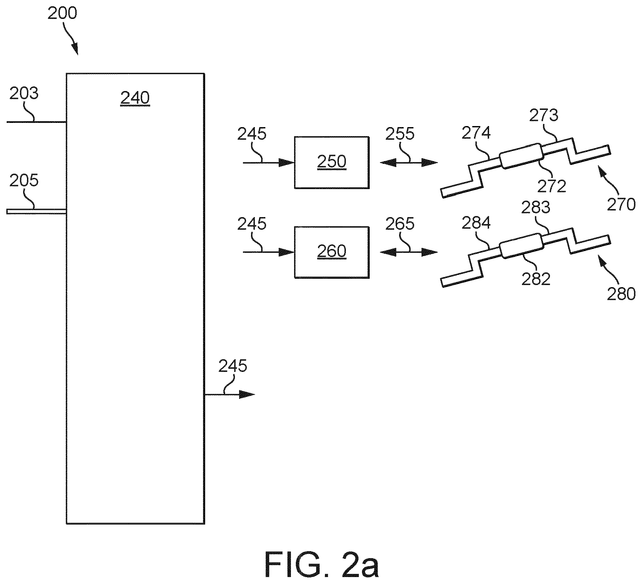

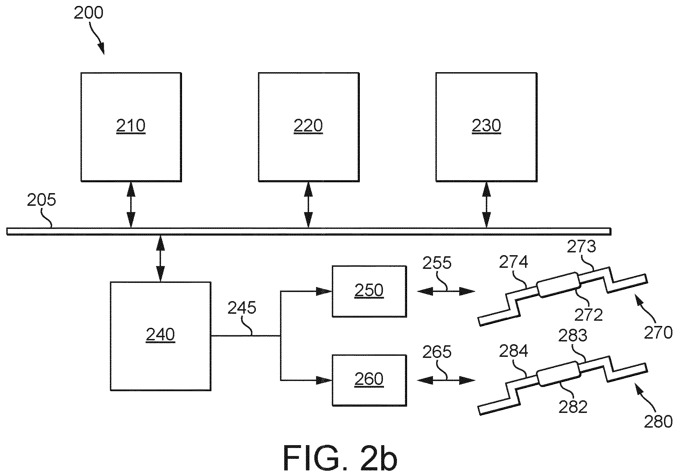

Figures 2a and 2b illustrate example control system 200 for a suspension system of a vehicle. A suspension system of a vehicle may comprise anti-roll bars 270, 280 which are controlled using an anti-roll control system. The anti-roll control system acts to control the anti-roll bars, to control a roll of a body of the vehicle and reduce the impact of disturbances from a road surface. The anti-roll control system may be electromechanical and/or hydraulic. Anti-roll bars 270, 280 may typically comprise stabiliser bars, typically metal, which join the vehicle suspension on either side of the vehicle axle, usually through drop links, and connect to a rotational actuator situated between the mounting points to the vehicle chassis. Each side of the anti-roll bar is able to rotate freely when a motor of the anti-roll control system is not energised. When the motor control is enabled (i.e. delivering torque), the anti-roll bar may act as a torsional spring. The anti-roll bars may be controlled to compensate for some vehicle movements such as body roll, for example from driving around a corner. Body roll can cause the wheels at the side of the vehicle outside the turn to reduce their contact with the road surface. Anti-roll bars may be controlled to counteract this effect and reduce the body roll effect, by transferring at least part of the additional load on the wheels at the side of the vehicle inside the turn to those wheels at the outside, for example by providing a torsional effect to pull the wheels towards the chassis and even out the imbalance in load on the wheels caused by cornering.

A typical suspension system may comprise passive front and rear anti-roll bars provided respectively between the front and rear pairs of wheels of a standard four-wheel vehicle. In a vehicle with an active roll control system, an anti-roll bar 270, 280 may respectively each comprise two anti-roll bar ends (273, 274; 283, 284) connected together by a central housing having an actuator 272, 282. The central housing may additionally have one or more of a gearbox, sensors, and dedicated actuator controllers. The actuator 272, 282 acts to provide an actively controlled torque rather than a fixed torsional stiffness provided by passive anti-roll bars. One or more sensors may monitor the movement of the vehicle, and provide the sensed parameters as input to the active roll control system to control the actuator and provide a suitable torque to the anti-roll bar. The two ends of the anti-roll bar (273, 274; 283, 284) may be identical, or may be non-identical.

Figure 2a shows an example control system 200 for a suspension system a vehicle, communicatively connected to front and rear anti-roll bars 270, 280. The control system 200 comprises a controller 240 which is connected by a communication channel 245 to anti-roll bar controllers 250, 260 configured to respectively control front and rear anti-roll actuators 272, 282. The controller 240 may be the controller 110 of Figure 1. The controller 240 may comprise one or more of the controllers 110 of Figure 1. In an example, the controller 240 may be a master controller for an electronic active roll control system in the vehicle. The controller 240 may host a vehicle level control strategy and actuation control for the electronic active roll control system in the vehicle.

The controller 240 may be configured to receive one or more sensor signal 203 from one or more sensors attached to the vehicle. The one or more sensor signals 203 may comprise, for example, a signal from a respective suspension height sensor of the vehicle suspension; a signal from a respective motor position sensor for the anti-roll bar actuators 272, 282; a signal from a respective hub acceleration sensor of the vehicle; and a signal from a respective torque sensor for the anti-roll bar actuators 272, 282. A suspension height sensor may be configured to determine a sensor signal indicative of one or more of a height of a left side and a height of a right side of the vehicle suspension. A motor position sensor may be configured to determine a sensor signal indicative of a position of a respective motor of the anti-roll bar actuators 272, 282. A hub acceleration sensor may be configured to determine a sensor signal indicative of an acceleration of one or more hub of a wheel of the vehicle. A torque sensor may be configured to provide a measure of an existing torque generated in the system, as a result of a target torque demand being requested by the controller.

The controller 240 may be configured to receive one or more communication signals via a communications bus 205. The communications bus 205 may be configured to deliver data to the controller 240 from other subsystems within the vehicle. For example, the communications bus 205 may be configured to communicate a signal indicating a status of one or more modules 210, 220, 230 that are in communicative connection with the controller 240 to the controller 240. In another example, the communications bus 205 may be configured to communicate a command from the controller 240 to the one or more modules 210, 220, 230 that are in communicative connection with the controller 240. The one or more modules 210, 220, 230, are discussed further in relation to Figure 2b below. Signals transmitted over connections 203 or 245 may alternatively or additionally be transmitted over communications bus 205.

The controller 240 may be configured to generate system demand signals to influence a vehicle's motion via the anti-roll actuators 272, 282. An actuator provided between a front pair of wheels of a vehicle may be called a front actuator. A front active roll control (FARC) module may be electrically connected to the front actuator, and may comprise the controller 250 to control the front actuator 272. Similarly, an actuator provided between a rear pair of wheels of a vehicle may be called a rear actuator. A rear active roll control (RARC) module may be electrically connected to the rear actuator and may comprise a controller 260 to control the rear actuator 282.

The front and rear anti-roll actuators 272, 282 comprises an electric motor which is controllable by the respective anti-roll controller 250, 260. Each of the front and rear anti-roll actuators 272, 282 may be controlled by its own respective anti-roll controller in some examples, or multiple anti-roll actuators may be controlled by a common anti-roll controller in some examples. Each of the anti-roll actuators 272, 282 may be individually controlled in some cases to improve the management of the roll of the body of the vehicle. The front and rear anti-roll actuators 272, 282 may be controlled by a control signal which is generated by the controller 240 may generate and output, through the output channel 245, to the anti-roll bar controllers 250, 260. The control signal may carry instructions to be implemented by the actuator, for example by providing a torque to apply to the anti-roll bar. For example, as discussed above, when the vehicle is cornering, a control signal may be transmitted to the anti-roll bar controllers 250, 260, which may in turn transmit a control signal via interface 255, 265, so that the front and read anti-roll actuators 272, 282 may mitigate a body roll effect. Similarly, anti-roll bar controllers 250, 260 may transmit measured values from the anti-roll actuators to the controller 240 through output channel 245.

Figure 2b shows an example control system 200 for a vehicle comprising one or more modules 210, 220, 230, a controller 240 and front and rear anti-roll bars 270, 280. As in Figure 2a, the control system 200 comprises a controller 240 which is connected by a communication channel 245 to controllers 250, 260 configured to respectively control front and rear anti-roll bar actuators 270; 280. Further, the controller 240 of the control system 200 is in a communicative connection to the one or more modules 210, 220, 230 via a communications bus 205. The one or more modules 210, 220, 230 may be configured to perform functions relating to power supply of the suspension system. Module 210 may be a power control module configured to control a power supply system for the suspension system. Module 220 may be a conversion module configured to convert electrical energy output from a vehicle power supply system. In an example, the conversion module 220 may comprise a DC-DC converter. Module 230 may be a capacitor or supercapacitor module configured to store electrical energy for the suspension system. Together, conversion module 220 and capacitor module 230 may be configured to supply electrical energy to the controllers 250, 260, such that the anti-roll bar actuators 272, 282 can be actuated. Figure 2b illustrates these modules 210, 220, 230 as individual modules. However, there may be examples whereby components within the modules 210, 220, and 230 are included in a single module. Similarly, communications links 205 and 245 may be the same in some examples.

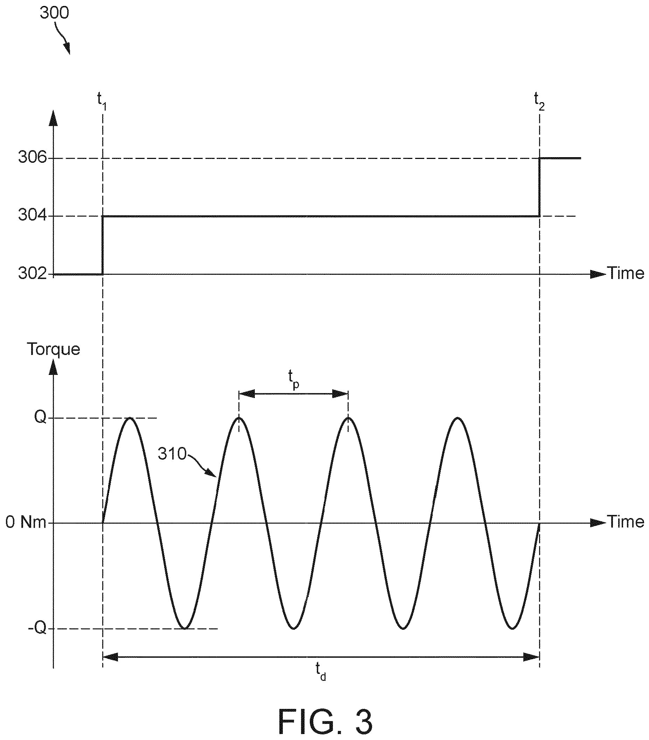

Figure 3 shows plots 300 of an example torque demand profile 310. The example torque demand profile 310 of Figure 3 shows an amount of torque, in Newton meters (Nm), to be demanded from the electromechanical actuator, as a function of time. The example torque profile comprises a single frequency sinusoidal wave, with peak amplitude Q and signal period tₚ. The sinusoidal torque demand profile may have a duration (period) of t_{d}.

Also in Figure 3, a status of the diagnostic test is shown. At the start of the process 302, the test has not yet been requested. At the next stage in the process 304, the test is in progress. At the next stage again in the process 306, the test is completed. Between time t₁ and t₂, while the test is in progress 304, the sinusoidal torque demand profile is applied to the electromechanical actuator system.

The use of a sinusoidal torque demand profile provides rapid mechanical movement of the electromechanical actuator system and the gearbox therein. When a rotational lash within a planetary gearbox of the electromechanical actuator system is released and quickly reengaged, an impulsive force may radiate through the electromechanical actuator system and into the vehicle structure. This may in turn result in an NVH event being generated - that is, a noise or vibration may be sensed. The larger the rate of change of torque across the gearbox is during a lash event, the larger the resulting measured impulse may be.

The diagnostic test intention is not necessarily to ensure the system is quiet, or exhibits a low level of NVH, during the test execution, but is instead to try and ensure that the NVH characteristic of the electromechanical system does not degrade or change over time. Such testing may help users in a service or manufacturing environment to identify any mechanical or structural issues within the electromechanical actuator system.

Examples of mechanical or structural issues that may occur within the electromechanical actuator system, and which may give rise the NVH events, include degradation of resilient, elastomeric or plastic material in the electromechanical actuator system, worn gears or sets of gears in the gearbox of the electromechanical actuator system, and a misaligned gear or set of gears in the gearbox of the electromechanical actuator system.

In some examples, the peak amplitude, Q, may be configurable by a user initiating a diagnostic test on the vehicle. In some examples, the test duration, t_{d}, may be configurable by a user initiating the diagnostic test on the vehicle. In some examples, one or more of the peak amplitude and the test duration may be configurable through a software update.

A torque demand signal corresponding to the torque demand profile 300 may be transmitted to the electromechanical actuator system of the vehicle, for example to the actuators 272, 282 of the vehicle suspension system as shown in Figures 2a-2b. Application of torque to the actuators 272, 282 may cause motion of the vehicle. For example, application of torque to the actuators may cause the vehicle to vibrate, oscillate, or rock in a sideways motion.

The torque demand signal may be applied separately to each of the actuators 272, 282 in some examples. Alternatively, the torque demand signal may be applied simultaneously to each of the actuators 272, 282 in some examples.

One or more characteristics of the vehicle, in response to the application of the torque demand signal, may be monitored using one or more sensors in the vehicle. For example, a rate of change of torque across a gearbox of a electromechanical actuator system may be measured in response to the application of the sinusoidal torque profile. In some examples, one or more of the magnitude, position or direction of an impulsive force radiated through the electromechanical actuator system and into the vehicle structure may be measured. Further characteristics which may be measured include one or more of: a frequency and magnitude of vibration of the vehicle structure; a dynamic of audible noise produced in the vehicle during an NVH event; and a duration for which a particular NVH event lasts after stopping application of a torque to an actuator.

In examples, instead of a sinusoidal torque demand profile, the torque demand signal may correspond to a continuously time varying torque demand profile with repeated zero-crossings, providing both a positive and negative torque demand. A signal capable of providing rapid mechanical movement of the electromechanical actuator system, as well as repeated release and re-engaging of rotational lash within the gearbox, may be suitable as a torque demand profile. For example, a triangular wave signal, a sawtooth wave signal, or a signal comprising multiple frequency sinusoidal components may be used. In some examples, the torque demand profile may be applied in a continuous manner, and in some examples, the torque demand profile may be applied as a set of discrete events.

In some examples, a frequency of a recorded NVH characteristic may be used to identify a specific fault type. For example, a detected vibration in a first frequency region may be indicated as potential fault due to perished resilient/elastomeric/plastic material, and a detected vibration in a second frequency region may be indicated as a potential fault due to mechanical fault in a gearbox of the actuator.

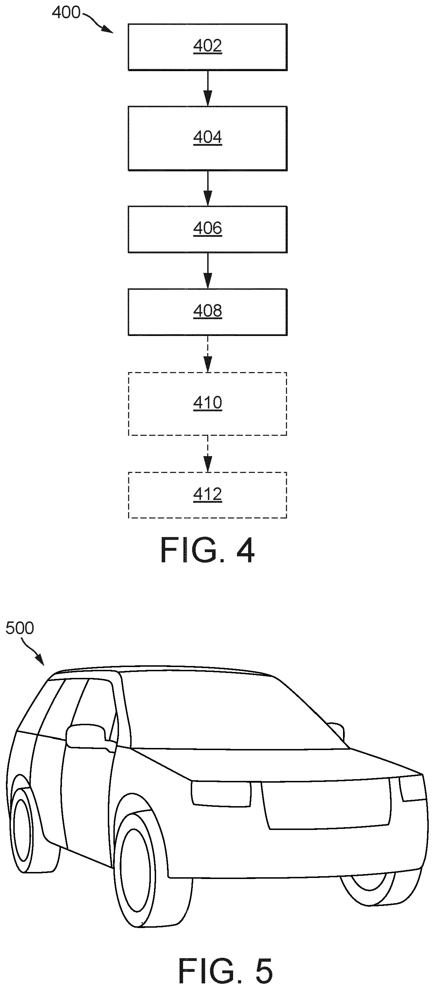

Figure 4 illustrates an example method 400 of testing system response in an electromechanical actuator system of a vehicle 500, such as the vehicle 500 illustrated in Figure 5. In particular, the method is a method of testing the NVH response of the vehicle and the electromechanical actuator system to a sinusoidal torque demand profile applied to an actuator of the electromechanical actuator system. The method 400 may be performed by the system 100 illustrated in Figure 1. The memory 130 may comprise computer readable instructions which, when executed by the processor 120 of any diagnostic apparatus disclosed herein, perform the method 400.

The method 400 comprises: generating a sinusoidal torque demand signal 402; transmitting the sinusoidal torque demand signal to the electromechanical actuator system 404; recording an NVH characteristic in response to the application of said sinusoidal torque demand signal 406; and outputting the recorded NVH characteristic 408.

In some examples, the method 400 may further comprise: comparing the recorded NVH characteristic to an expected NVH profile 410; and outputting a result of the comparison 412. The expected NVH profile against which the recorded NVH characteristic is compared may be a standard NVH profile for the particular type or model of vehicle. Alternatively the expected NVH profile may be a previously recorded NVH characteristic of the specific vehicle being tested.

In some examples, verification of satisfaction of one or more safety preconditions may be required prior to transmitting the torque demand signal. These safety preconditions may comprise one or more of: ensuring that a system automotive safety level (ASIL) is or can be maintained throughout the duration of the diagnostic test; verifying that the vehicle is in a stationary state; verifying that there are no fault conditions in the vehicle (either current or recently recorded); and verifying that a provided security credential of a user initiating the test meets a security authorisation level. In some examples, application of the torque demand signal to the electromechanical actuator system may be stopped if the duration of the diagnostic test exceeds an expected or predetermined time limit. Accordingly, system and vehicle safety is assured by one or more of: preventing access to the test by unauthorized users, as security access is required to place the controller (for example, a controller of the chassis control module) in the correct operational state to run the test; not causing active torque to be delivered by the system if any faults are present; not starting the test if vehicle level conditions are not met (for example the vehicle being stationary, the engine running); and aborting the diagnostic test if the test does not conclude within an expected time period.

In some examples, the method may further comprise comparing one or more recorded NVH characteristics to a predetermined threshold or range, and recording or outputting a fault indication if the one or more NVH characteristics are exceed the predetermined threshold, fail to meet the predetermined threshold, or are outside of the predetermined range.

In some examples, the method may further comprise measuring to ensure the NVH characteristics of the electronic actuator system are within acceptable limits. Optionally, historic data of NVH characteristics of the vehicle may be stored in order to monitor for any possible degradation of the electronic actuator system, or parts thereof.

The illustration of a particular order to the blocks of the method of Figure 4 does not necessarily imply that there is a required or preferred order for the blocks and the order and arrangement of the blocks may be varied. Furthermore, it may be possible for some steps to be omitted or added in other examples. Therefore, this disclosure also includes computer software that, when executed, is configured to perform any method disclosed herein, such as that illustrated in Figure 4. Optionally, the computer software is stored on a computer readable medium, and may be tangibly stored.

A set of computer-readable instructions may be provided which, when executed, cause said controller 110 or control system 100 to implement any method disclosed herein. The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on one or more electronic processors, or, optionally, on the same one or more processors as the first controller. It will be appreciated, however, that other arrangements are also useful, and therefore, the present disclosure is not intended to be limited to any particular arrangement. In any event, the set of instructions described above may be embedded in a computer-readable storage medium (for example, a non-transitory computer-readable storage medium) that may comprise any mechanism for storing information in a form readable by a machine or electronic processors/computational device, including, without limitation: a magnetic storage medium (for example, floppy diskette); optical storage medium (for example, CD-ROM); magneto optical storage medium; read only memory (ROM); random access memory (RAM); erasable programmable memory (for example, EPROM and EEPROM); flash memory; or electrical or other types of medium for storing such information/instructions.

Figure 5 illustrates a vehicle 500 according to an embodiment of the present invention. The vehicle 500 comprises a control system 100 as illustrated in Figure 1. The vehicle 500 in the present embodiment is an automobile, such as a wheeled vehicle, but it will be understood that the control system, active suspension system and diagnostic apparatus may be used in other types of vehicle.

The diagnostic apparatuses and methods described herein may enable a user in a service or manufacturing environment to identify degradation of the electromechanical actuator system or parts thereof. The diagnostic apparatuses and methods described herein may enable verification of correct system integration of the electromechanical actuator system, due to exciting NVH events in the vehicle and comparing to an expected NVH profile.

The diagnostic apparatuses and methods described herein may allow for one or more of: on demand NVH evaluation of the electromechanical actuator system; individual axle or actuator input excitation; and a repeatable electronic actuator system input excitation. Furthermore, the diagnostic apparatuses and methods described herein may help to ensure electronic actuator system functional safety is met prior to test execution. The diagnostic apparatuses and methods described herein may allow for one or more of: objective NVH vehicle assessments throughout the vehicle lifetime in order to quantify any degradation of the electronic actuator system or parts thereof; investigation and resolution of issues with vehicle integration or mechanical connectivity; investigation of mechanical degradation of an actuator of the electronic actuator system; and accurate measurement and storage of the performance of the system to identify degradation over time.

It will be appreciated that various changes and modifications can be made to the present invention without departing from the scope of the present application. As used here, 'connected' means 'electrically interconnected' either directly or indirectly. Electrical interconnection does not have to be galvanic. Where the control system is concerned, connected means operably coupled to the extent that messages are transmitted and received via the appropriate communication means.

## Claims

1. A diagnostic apparatus (100) for use in testing an electromechanical actuator system of a vehicle (500), the electromechanical actuator system being an anti-roll control system of the vehicle (500), the diagnostic apparatus comprising one or more controllers (110), the diagnostic apparatus configured to:
generate (402) a torque demand signal (155) corresponding to a sinusoidal torque demand profile (310), the sinusoidal torque demand profile (310) configured to cause excitation of noise, vibration and harshness, NVH, characteristics of the vehicle;
transmit (404) the torque demand signal (155) to the electromechanical actuator system of the vehicle (500);
record (406) a NVH characteristic of the vehicle (500) generated in response to application of the torque demand signal (155); and
output (408) the recorded NVH characteristic of the vehicle (500).

2. The diagnostic apparatus (100) of claim 1, the diagnostic apparatus (100) configured to:
compare (410) the generated NVH characteristic of the vehicle (500) to an expected NVH profile for the vehicle (500); and
output (412) a result of the comparison.

3. The diagnostic apparatus (100) of claim 1 or 2, wherein the sinusoidal torque demand profile (310) comprises one or more of:
an amplitude within a predetermined amplitude range;
a frequency within a predetermined frequency range; and
a signal duration within a predetermined signal duration range.

4. The diagnostic apparatus (100) of any preceding claim, wherein one or more of an amplitude and a frequency of the sinusoidal torque demand profile (310) are set via a vehicle software update.

5. The diagnostic apparatus (100) of any preceding claim, wherein the sinusoidal torque demand profile (310) is generated to excite NVH characteristics caused by one or more of:
a gearbox of an actuator (272, 282) of the electromechanical actuator system; and
a degraded resilient, elastomeric or plastic material in the electromechanical actuator system.

6. The diagnostic apparatus (100) of any preceding claim, wherein the diagnostic apparatus (100) is configured to, prior to applying the torque demand signal, verify that one or more safety preconditions are met.

7. The diagnostic apparatus (100) of claim 6, wherein verifying that the one or more safety preconditions are met comprises one or more of:
ensuring that a system automotive safety integrity level, ASIL, is maintained;
verifying that the vehicle (500) is in a stationary state; and
verifying that there are no fault conditions in the vehicle (500).

8. The diagnostic apparatus (100) of claim 6 or 7, wherein verifying that the one or more safety preconditions are met comprises verifying if a provided security credential meets a security authorisation level.

9. The diagnostic apparatus (100) of any preceding claim, configured to stop application of the torque demand signal (155) to the electromechanical actuator system if a test duration exceeds an expected time period.

10. The diagnostic apparatus (100) of any preceding claim, configured to:
identify a frequency of the recorded NVH characteristic;
when the frequency of the recorded NVH characteristic is in a first frequency region, attribute the recorded NVH characteristic to a first fault type; and
when the frequency of the recorded NVH characteristic is in a second frequency region, attribute the recorded NVH characteristic to a second fault type.

11. A system, comprising:
the diagnostic apparatus (100) according to any preceding claim; and
the electromechanical actuator system of the vehicle (500).

12. A vehicle (500) comprising a diagnostic apparatus (100) according to any of claims 1 to 10, or the system of claim 11.

13. A computer implemented method, comprising:
generating (402) a torque demand signal (155) corresponding to a sinusoidal torque demand profile (310), the sinusoidal torque demand profile (310) configured to cause excitation of noise, vibration and harshness, NVH, characteristics of a vehicle (500);
transmitting (404) the torque demand signal to an electromechanical actuator system of the vehicle (500), the electromechanical actuator system being an anti-roll control system of the vehicle (500);
recording (406) a NVH characteristic of the vehicle (500) generated in response to application of the torque demand signal (155); and
outputting (408) the recorded NVH characteristic of the vehicle (500).

14. The computer implemented method of claim 13, comprising verifying that one or more safety preconditions are met prior to applying the torque demand signal (155).

15. Computer readable instructions which, when executed by a processor, are arranged to perform a method according to claim 13 or 14.

## Patentansprüche

1. Diagnosegerät (100) zur Verwendung beim Testen eines elektromechanischen Aktuatorsystems eines Fahrzeugs (500), wobei das elektromechanische Aktuatorsystem ein Antirollsteuersystem des Fahrzeugs (500) ist, wobei das Diagnosegerät eine oder mehrere Steuerungen (110) umfasst, wobei das Diagnosegerät konfiguriert ist zum:
Erzeugen (402) eines Drehmomentanforderungssignals (155), das einem sinusförmigen Drehmomentanforderungsprofil (310) entspricht, wobei das sinusförmige Drehmomentanforderungsprofil (310) konfiguriert ist, um eine Anregung der Eigenschaften des Fahrzeugs in Bezug auf Geräusche, Vibrationen und Rauheit, NVH, zu verursachen;
Übertragen (404) des Drehmomentanforderungssignals (155) an das elektromechanische Aktuatorsystem des Fahrzeugs (500);
Aufzeichnen (406) einer NVH-Eigenschaft des Fahrzeugs (500), die als Reaktion auf das Anlegen des Drehmomentanforderungssignals (155) erzeugt wird; und
Ausgeben (408) der aufgezeichneten NVH-Eigenschaften des Fahrzeugs (500).

2. Diagnosegerät (100) nach Anspruch 1, wobei das Diagnosegerät (100) konfiguriert ist zum:
Vergleichen (410) der erzeugten NVH-Eigenschaften des Fahrzeugs (500) mit einem erwarteten NVH-Profil für das Fahrzeug (500); und
Ausgeben (412) eines Ergebnisses des Vergleichs.

3. Diagnosegerät (100) nach Anspruch 1 oder 2, wobei das sinusförmige Drehmomentanforderungsprofil (310) eines oder mehreres von Folgendem umfasst:
eine Amplitude innerhalb eines vorbestimmten Amplitudenbereichs;
eine Frequenz innerhalb eines vorbestimmten Frequenzbereichs; und
eine Signaldauer innerhalb eines vorbestimmten Signaldauerbereichs.

4. Diagnosegerät (100) nach einem der vorstehenden Ansprüche, wobei eine oder mehrere Amplituden und Frequenzen des sinusförmigen Drehmomentanforderungsprofils (310) über eine Fahrzeugsoftwareaktualisierung gesetzt werden.

5. Diagnosegerät (100) nach einem der vorstehenden Ansprüche, wobei das sinusförmige Drehmomentanforderungsprofil (310) erzeugt wird, um NVH-Eigenschaften anzuregen, die durch eines oder mehreres von Folgendem verursacht werden:
ein Getriebe eines Aktuators (272, 282) des elektromechanischen Aktuatorsystems; und
ein degradiertes elastisches, elastomeres oder plastisches Material im elektromechanischen Aktuatorsystem.

6. Diagnosegerät (100) nach einem der vorstehenden Ansprüche, wobei das Diagnosegerät (100) konfiguriert ist, um vor dem Anlegen des Drehmomentanforderungssignals zu überprüfen, ob eine oder mehrere Sicherheitsvoraussetzungen erfüllt sind.

7. Diagnosegerät (100) nach Anspruch 6, wobei die Überprüfung, ob die eine oder mehrere Sicherheitsvoraussetzungen erfüllt sind, eines oder mehreres von Folgendem umfasst:
Sicherstellen, dass ein Systemautomobil- Sicherheitsintegritätsniveau, ASIL, aufrechterhalten wird;
Überprüfen, ob sich das Fahrzeug (500) in einem stationären Zustand befindet; und
Überprüfen, dass keine Fehler im Fahrzeug (500) vorhanden sind.

8. Diagnosegerät (100) nach Anspruch 6 oder 7, wobei das Überprüfen, ob die eine oder mehrere Sicherheitsvoraussetzungen erfüllt sind, das Überprüfen umfasst, ob ein bereitgestellter Sicherheitsnachweis ein Sicherheitsautorisierungsniveau erfüllt.

9. Diagnosegerät (100) nach einem der vorstehenden Ansprüche, das konfiguriert ist, um das Anlegen des Drehmomentanforderungssignals (155) an das elektromechanische Aktuatorsystem zu beenden, wenn eine Testdauer eine erwartete Zeitperiode überschreitet.

10. Diagnosegerät (100) nach einem der vorstehenden Ansprüche, das konfiguriert ist zum:
Identifizieren einer Frequenz der erfassten NVH-Eigenschaft;
wenn die Frequenz der aufgezeichneten NVH-Eigenschaft in einer ersten Frequenzregion liegt, Zuordnen der aufgezeichneten NVH-Eigenschaft zu einer ersten Fehlerart; und
wenn die Frequenz der aufgezeichneten NVH-Eigenschaft in einer zweiten Frequenzregion liegt, Zuordnen der aufgezeichneten NVH-Eigenschaft zu einer zweiten Fehlerart.

11. System, umfassend:
das Diagnosegerät (100) nach einem der vorstehenden Ansprüche; und
das elektromechanische Aktuatorsystem des Fahrzeugs (500).

12. Fahrzeug (500), umfassend ein Diagnosegerät (100) nach einem der Ansprüche 1 bis 10 oder das System nach Anspruch 11.

13. Computerimplementiertes Verfahren, umfassend:
Erzeugen (402) eines Drehmomentanforderungssignals (155), das einem sinusförmigen Drehmomentanforderungsprofil (310) entspricht, wobei das sinusförmige Drehmomentanforderungsprofil (310) konfiguriert ist, um eine Anregung der Eigenschaften eines Fahrzeugs (500) in Bezug auf Geräusche, Vibrationen und Rauheit, NVH, zu verursachen;
Übertragen (404) des Drehmomentanforderungssignals an ein elektromechanisches Aktuatorsystem des Fahrzeugs (500), wobei das elektromechanische Aktuatorsystem ein Antirollsteuersystem des Fahrzeugs (500) ist;
Aufzeichnen (406) einer NVH-Eigenschaft des Fahrzeugs (500), die als Reaktion auf das Anlegen des Drehmomentanforderungssignals (155) erzeugt wird; und
Ausgeben (408) der aufgezeichneten NVH-Eigenschaften des Fahrzeugs (500).

14. Computerimplementiertes Verfahren nach Anspruch 13, umfassend das Überprüfen, ob eine oder mehrere Sicherheitsvoraussetzungen erfüllt sind, bevor das Drehmomentanforderungssignal (155) angelegt wird.

15. Computerlesbare Anweisungen, die, wenn sie von einem Prozessor ausgeführt werden, so angeordnet sind, dass sie ein Verfahren nach Anspruch 13 oder 14 durchführen.

## Revendications

1. Appareil de diagnostic (100) destiné à être utilisé pour tester un système d'actionneur électromécanique d'un véhicule (500), le système d'actionneur électromécanique étant un système de commande anti-roulis du véhicule (500), l'appareil de diagnostic comprenant un ou plusieurs dispositifs de commande (110), l'appareil de diagnostic étant configuré pour :
générer (402) un signal de demande de couple (155) correspondant à un profil de demande de couple sinusoïdal (310), le profil de demande de couple sinusoïdal (310) étant configuré pour provoquer une excitation de caractéristiques de bruit, de vibration et de dureté de conduite, NVH, du véhicule ;
transmettre (404) le signal de demande de couple (155) au système d'actionneur électromécanique du véhicule (500) ;
enregistrer (406) une caractéristique NVH du véhicule (500) générée en réponse à une application du signal de demande de couple (155) ; et
émettre (408) la caractéristique NVH enregistrée du véhicule (500).

2. Appareil de diagnostic (100) selon la revendication 1, l'appareil de diagnostic (100) étant configuré pour :
comparer (410) la caractéristique NVH générée du véhicule (500) à un profil NVH attendu pour le véhicule (500) ; et
émettre (412) un résultat de la comparaison.

3. Appareil de diagnostic (100) selon la revendication 1 ou 2, dans lequel le profil de demande de couple sinusoïdal (310) comprend une ou plusieurs parmi :
une amplitude dans une plage d'amplitudes prédéterminée ;
une fréquence dans une plage de fréquences prédéterminée ; et
une durée de signal dans une plage de durée de signal prédéterminée.

4. Appareil de diagnostic (100) selon l'une quelconque revendication précédente, dans lequel une ou plusieurs parmi une amplitude et une fréquence du profil de demande de couple sinusoïdal (310) sont définies par l'intermédiaire d'une mise à jour logicielle de véhicule.

5. Appareil de diagnostic (100) selon l'une quelconque revendication précédente, dans lequel le profil de demande de couple sinusoïdal (310) est généré pour exciter des caractéristiques NVH causées par un ou plusieurs parmi :
une boîte de vitesses d'un actionneur (272, 282) du système d'actionneur électromécanique ; et
un matériau élastique, élastomère ou plastique dégradé dans le système d'actionneur électromécanique.

6. Appareil de diagnostic (100) selon l'une quelconque revendication précédente, dans lequel l'appareil de diagnostic (100) est configuré pour, avant d'appliquer le signal de demande de couple, vérifier qu'une ou plusieurs conditions préalables de sécurité sont satisfaites.

7. Appareil de diagnostic (100) selon la revendication 6, dans lequel le fait de vérifier que la ou les conditions préalables de sécurité sont satisfaites comprend un ou plusieurs parmi :
le maintien d'un niveau d'intégrité de sécurité automobile, ASIL, de système ;
le fait de vérifier que le véhicule (500) est dans un état stationnaire ; et
le fait de vérifier qu'il n'existe pas de conditions de défaillance dans le véhicule (500).

8. Appareil de diagnostic (100) selon la revendication 6 ou 7, dans lequel le fait de vérifier que la ou les conditions préalables de sécurité sont satisfaites comprend le fait de vérifier si un justificatif de sécurité fourni satisfait à un niveau d'autorisation de sécurité.

9. Appareil de diagnostic (100) selon l'une quelconque revendication précédente, configuré pour arrêter une application du signal de demande de couple (155) au système d'actionneur électromécanique si une durée de test dépasse une période de temps attendue.

10. Appareil de diagnostic (100) selon l'une quelconque revendication précédente, configuré pour :
identifier une fréquence de la caractéristique NVH enregistrée ;
lorsque la fréquence de la caractéristique NVH enregistrée se situe dans une première région de fréquences, attribuer la caractéristique NVH enregistrée à un premier type de défaillance ; et
lorsque la fréquence de la caractéristique NVH enregistrée se situe dans une seconde région de fréquences, attribuer la caractéristique NVH enregistrée à un second type de défaillance.

11. Système, comprenant :
un appareil de diagnostic (100) selon l'une quelconque revendication précédente ; et
le système d'actionneur électromécanique du véhicule (500).

12. Véhicule (500) comprenant un appareil de diagnostic (100) selon l'une quelconque des revendications 1 à 10, ou le système selon la revendication 11.

13. Procédé mis en œuvre par ordinateur, comprenant :
la génération (402) d'un signal de demande de couple (155) correspondant à un profil de demande de couple sinusoïdal (310), le profil de demande de couple sinusoïdal (310) étant configuré pour provoquer une excitation des caractéristiques de bruit, de vibration et de dureté de conduite, NVH, d'un véhicule (500) ;
la transmission (404) du signal de demande de couple à un système d'actionneur électromécanique du véhicule (500), le système d'actionneur électromécanique étant un système de commande anti-roulis du véhicule (500) ;
l'enregistrement (406) d'une caractéristique NVH du véhicule (500) générée en réponse à une application du signal de demande de couple (155) ; et
l'émission (408) de la caractéristique NVH enregistrée du véhicule (500).

14. Procédé mis en œuvre par ordinateur selon la revendication 13, comprenant le fait de vérifier qu'une ou plusieurs conditions préalables de sécurité sont satisfaites avant une application du signal de demande de couple (155).

15. Instructions lisibles par ordinateur qui, lorsqu'elles sont exécutées par un processeur, sont conçues pour réaliser un procédé selon la revendication 13 ou 14.
